# FASCICULE DE BREVET EUROPEEN

(11) **EP 2 596 725 B1**
(45) Date de publication et mention de la délivrance du brevet: **21.11.2018**
(21) Numéro de dépôt: 11818457.1
(22) Date de dépôt: 08.09.2011
(51) Int. Cl.: A47G 19/16, A47J 31/06, B65B 29/04

(54) **PASSOIRE JETABLE POUR INFUSER LE THÉ AVEC SYSTÈME D'ESSORAGE**
EINWEGSIEB ZUM EINGIESSEN VON TEE MIT EINEM PRESSSYSTEM
DISPOSABLE STRAINER FOR INFUSING TEA WITH A SQUEEZING SYSTEM

(30) Priorité: 20.08.2010 RU 2010134801
(43) Date de publication de la demande: 29.05.2013
(73) Titulaire: Merinova, Elena Arkadyevna, Kirov 610000 (RU)
(72) Inventeur: Merinova, Elena Arkadyevna, Kirov 610000 (RU)
(74) Mandataire: Lapienis, Juozas
(86) Numéro de dépôt international: PCT/RU2011/000689
(87) Numéro de publication internationale: WO 2012/023883

(56) Documents cités:
- EP-A2- 1 757 213
- EP-A2- 1 757 213
- WO-A1-99/03734
- DE-A1- 3 935 121
- GB-A- 2 281 852
- JP-A- 2005 206 256
- NZ-A- 256 118
- US-A- 5 937 737

## Description

### DESCRIPTION DE L'INVENTION

La présente invention concerne des moyens jetables pour préparer du thé ou d'autres infusions.

A partir de l'état de l'art existant, on connaît un dispositif pour infuser (US3631793 (A) publié le 04.01.1972).

La passoire à thé (EP1757213 (A2) publié le 28.02.2007) est la plus proche par rapport à la solution technique déposée. Cette passoire est représentée en variantes différentes et est un moyen individuel, y compris jetable, pour infuser le thé en vrac. Elle permet à un consommateur d'infuser le thé en vrac de qualité et de quantité désirée. L'inconvénient de ce dispositif est que, lors de son utilisation en tant que le moyen individuel, la passoire est plongée pour infuser dans un verre ou dans une tasse et, avant la consommation du thé, elle doit obligatoirement être retirée du vaisseau avec de l'eau, et, dans ce cas, l'eau absorbée par le thé infusé va couler de la passoire en laissant des traces indésirables. L'existence de la possibilité d'essorer le thé infusé permettrait de rendre le procédé de la préparation du thé plus simple et hygiénique.

Le problème que l'invention déposée vise à résoudre est de fournir au consommateur un dispositif jetable pour infuser le thé en vrac qui serait plus pratique à recycler après son utilisation.

Ce problème est résolu grâce à ce que l'invention déposée se présente comme une passoire jetable pour infuser le thé en vrac selon la revendication 1.

Le dispositif peut comporter une plaque de positionnement sur la surface du récipient d'infusion de la passoire qui permet de retenir les fils en position déterminée sur la surface du récipient d'infusion sans limiter la liberté de course des fils.

Le dispositif peut comporter le mécanisme d'essorage avec un nombre varié de fils.

Le dispositif peut comporter le mécanisme d'essorage avec un mode varié de répartition de fils.

Le dispositif peut comporter le mécanisme d'essorage consistant en fils, une extrémité de chacun d'eux est fixe et reste immobile tandis que l'autre est mobile et s'étire lors de l'essorage.

Le dispositif peut comporter le mécanisme d'essorage consistant en fils, les deux extrémités de chacun d'eux sont mobiles au même degré.

Le dispositif peut comporter des tirettes sur les extrémités mobiles des fils du mécanisme d'essorage.

Le dispositif peut comporter le mécanisme d'essorage fixé à la base rigide de la passoire, dont les extrémités immobiles des fils sont fixées dans un corps de la base rigide et dont les mobiles passent par des rainures dans le corps de la base rigide de la passoire.

Le dispositif peut comporter le mécanisme d'essorage fixé au récipient d'infusion de la passoire par une ou plusieurs plaques de positionnement.

Le dispositif peut comporter la plaque de positionnement dont la dimension est égale à la dimension de la surface d'une partie d'infusion de la passoire.

Le dispositif peut être fabriqué : la base rigide en matériau solide et facilement pliable, par exemple, en plastique, en carton et en matériaux qui leurs sont analogues, et le récipient d'infusion en matériau facilement compressible et perméable à l'humidité, par exemple, en cellulose, en papier-filtre et en d'autres matériaux assurant le fonctionnement du dispositif.

Le dispositif peut comporter sur la base rigide de la passoire un fermoir permettant de fixer la base rigide de la passoire en position pliée.

Le dispositif peut comporter la base rigide où la ligne de pliage est tracée à l'aide d'une ligne de perforation, d'une encoche, d'une incision, d'une combinaison de ces caractéristiques ou à l'aide d'un autre moyen approprié.

Le résultat technique assuré par l'ensemble des caractéristiques précitées est la possibilité pour le consommateur d'obtenir aisément une portion individuelle de thé à partir du thé en vrac, et ensuite de recycler, avec des moindres pertes, le thé infusé avec le dispositif.

Le fond de l'invention est illustré par des figures:
La fig. 1 représente le dispositif, vue de face;
La fig. 1A représente le dispositif, vue de côté;
La fig. 1B représente le dispositif, vue de dessus;
La fig. 1C représente le dispositif, vue de dessous;
La fig. 2 représente le dispositif au moment de l'essorage du thé infusé, vue de côté;
La fig. 3 représente une variante du dispositif avec certaines modifications, vue de dessus.

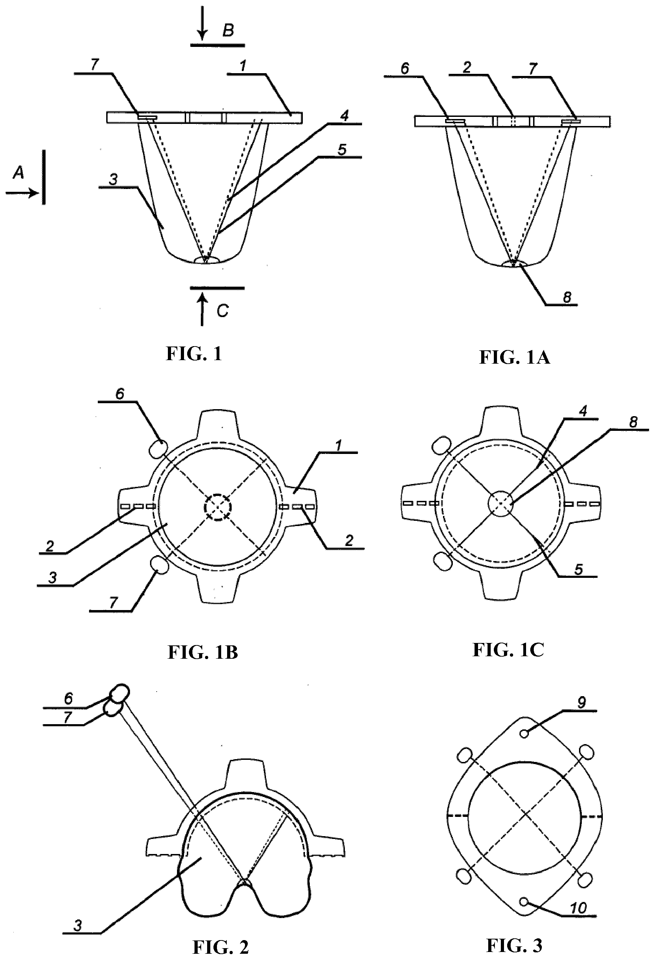

Le dispositif consiste en : une base rigide 1 placée sur le bord d'un vaisseau avec de l'eau, une ligne de pliage 2 traversant la base 1, un récipient 3 d'infusion perméable à l'eau et un mécanisme d'essorage, consistant en fils 4 et 5 et en tirettes 6 et 7 aux extrémités des fils (fig. 1, 1A).

Le mécanisme d'essorage est constitué de deux fils 4 et 5 qui traversent le centre du récipient 3 d'infusion sur sa surface extérieure d'un bout à l'autre bout et qui se croisent sous un angle droit l'un par rapport à l'autre afin d'assurer de manière la plus complète et uniforme l'essorage du thé infusé. Une extrémité de chaque fil est fixé dans un corps de la base rigide de la passoire 1, tandis que l'autre extrémité disposée du côté opposé de la base rigide 1 passe à travers une rainure dans le corps de la base 1 et se termine par une tirette (fig. 1B).

Dans le mécanisme d'essorage il peut être utilisé un nombre varié de fils et ils peuvent être réparties différemment sur la surface du récipient d'infusion. Il est possible une variante où les extrémités des fils ne sont pas fixés dans le corps de la base mais les fils sont mobiles des deux extrémités et, en traversant les rainures dans le corps de la base, se terminent par les tirettes (fig.3).

Pour maintenir les positions déterminées des fils et pour assurer l'uniformité de l'essorage, le dispositif peut comporter une plaque de positionnement 8 (fig. 1A, 1C). Les fils 4 et 5 passent au-dessus de la surface extérieure du récipient 3 d'infusion et ont une libre course tandis que la plaque de positionnement 8 est fixée à la surface extérieure du récipient 3 d'infusion par-dessus des fils 4 et 5. Ainsi, entre le récipient 3 d'infusion et la plaque de positionnement 8, sont formés des canaux pour la course des fils 4 et 5 qui leurs empêchent une déviation tout en leur permettant de coulisser librement lors de l'essorage. La plaque de positionnement peut être ronde, cruciforme ou avoir une autre forme et peut être de dimension différente.

Le dispositif peut comporter plusieurs plaques de positionnement. Il est possible une variante où les fils du mécanisme d'essorage ne sont pas fixés à la base rigide de la passoire mais sont attachés seulement au récipient d'infusion à l'aide des plaques de positionnement.

En plus, la base du dispositif peut comporter un fermoir (fig. 3) qui permet de fixer la base rigide de la passoire en position pliée. Le dessin sur la fig. 3 représente une variante du fermoir où le fermoir consiste en une partie saillante 9 disposée sur une première moitié de la base de la passoire et en un orifice 10 de dimension appropriée sur l'autre moitié. Après le pliage de la base de la passoire la saillie 9 rentre dans l'orifice 10 et y est fixé par frottement.

La fig. 3 représente la variante du dispositif avec le fermoir sans la plaque de positionnement et avec une modification du design de la base.

Le dispositif déposé peut être produit avec des différents design et volume. La base rigide peut être ronde, carrée ou avoir une autre forme façonnée et comporter des ergots horizontaux (coïncidant avec le plan de la base rigide) pour mieux se tenir sur les bords du vaisseau avec de l'eau, pour que la passoire soit plus aisée à tenir au moment de pliage, ainsi que pour que les endroits par lesquels passe la ligne de pliage, par exemple, avec une perforation, soient suffisamment larges et solides. On peut produire le récipient d'infusion de volume différent afin d'assurer l'infusion de la quantité nécessaire du thé et afin d'avoir une profondeur différente pour rendre possible l'infusion du thé dans les vaisseaux divers.

Lors de la production de la base rigide, la ligne de pliage peut être en forme d'une encoche, d'une ligne de perforation, avoir des incisions ou d'autres caractéristiques appropriés.

Le dispositif fonctionne de manière suivante. Le thé est versé dans le récipient d'infusion de la passoire 3, après quoi la base rigide de la passoire 1 est placé sur le bord du vaisseau avec de l'eau et le récipient d'infusion 3 est immergé dans l'eau. A la fin du processus d'infusion, la base rigide de la passoire 1 est soulevée et est pliée en deux le long de la ligne de pliage 2 en permettant de retenir le thé infusé à l'intérieur de la passoire.

Ensuite, en tenant la passoire pliée par une main, avec l'autre le consommateur tire les fils du mécanisme d'essorage 4 et 5 par les tirettes 6 et 7, il en résulte que le récipient d'infusion 3 avec le thé infusé sont comprimés (fig. 2) et l'eau excédentaire est essorée dans le vaisseau avec du thé préparé. Si la base est munie du fermoir, la passoire est verrouillée, à défaut elle peut être fixée en position pliée par enroulement sur elle des fils étirés. Ensuite, la passoire est recyclée.

La fabrication de la passoire jetable déposée permettra au consommateur d'élargir les possibilités de la consommation du thé en vrac en renonçant à l'utilisation des sachets de thé prêts à l'emploi qui, comme cela est connu, comportent essentiellement du thé granulé de qualité inférieure, bien qu'ils soient très commodes à utiliser. La présence de la passoire jetable rendra la consommation du thé de qualité supérieure aussi simple et aisée.

Cette passoire est aussi un bon outil de marketing pour les producteurs du thé en vrac car la production de cette passoire pourra augmenter considérablement la vente du thé en vrac et un bas prix de revient de la passoire permettra, si on le souhaite, de la joindre gratuitement à la boîte du thé comme un bonus stimulant pour l'acheteur.

En plus, la base rigide de la passoire peut servir un bon support publicitaire.

D'autres avantages de ce dispositif sont aussi une simplicité de fabrication, un prix bas, une compacité ainsi que la possibilité de le produire à partir des matériaux écologiques.

## Revendications

1. Passoire jetable pour infuser le thé en vrac, comprenant un récipient (3) d'infusion en matériau compressible et perméable à l'humidité fixé à une base (1) rigide avec une ligne (2) de pliage ayant un trou traversant qui débouche dans le récipient (3) prévu pour remplir la passoire du thé et un mécanisme d'essorage en fils (4) posés sur la surface du récipient (3) d'infusion, qui permet, à l'aide d'étirement des fils, d'essorer le thé infusé se trouvant à l'intérieur de la passoire lorsque la passoire est pliée le long de la ligne (2) de pliage.

2. Passoire jetable selon la revendication 1, **caractérisé en ce qu'**il comporte une plaque de positionnement sur la surface du récipient d'infusion de la passoire qui permet de retenir les fils en position déterminée sur la surface du récipient d'infusion sans limiter la liberté de course des fils.

3. Passoire jetable selon la revendication 1, **caractérisé en ce qu'**il comporte le mécanisme d'essorage avec un nombre varié de fils.

4. Passoire jetable selon la revendication 1, **caractérisé en ce qu'**il comporte le mécanisme d'essorage avec un mode varié de répartition de fils.

5. Passoire jetable selon la revendication 1, **caractérisé en ce qu'**il comporte le mécanisme d'essorage consistant en fils, une extrémité de chacun d'eux est fixe et reste immobile tandis que l'autre est mobile et s'étire lors de l'essorage.

6. Passoire jetable selon la revendication 1, **caractérisé en ce qu'**il comporte le mécanisme d'essorage consistant en fils, les deux extrémités de chacun d'eux sont mobiles au même degré.

7. Passoire jetable selon la revendication 1, **caractérisé en ce qu'**il comporte des tirettes sur les extrémités mobiles des fils du mécanisme d'essorage.

8. Passoire jetable selon la revendication 1, **caractérisé en ce qu'**il comporte le mécanisme d'essorage fixé à la base rigide de la passoire, dont les extrémités immobiles des fils sont fixées dans un corps de la base rigide et dont les mobiles passent par des rainures dans le corps de la base rigide de la passoire.

9. Passoire jetable selon la revendication 1, **caractérisé en ce qu'**il comporte le mécanisme d'essorage fixé au récipient d'infusion de la passoire par une ou plusieurs plaques de positionnement.

10. Passoire jetable selon la revendication 2, **caractérisé en ce qu'**il comporte la plaque de positionnement dont la dimension est égale à la dimension de la surface d'une partie d'infusion de la passoire.

11. Passoire jetable selon la revendication 1, **caractérisé en ce qu'**il est fabriqué: la base rigide en matériau solide et facilement pliable, par exemple, en plastique, en carton et en matériaux qui leurs sont analogues, et le récipient d'infusion en matériau facilement compressible et perméable à l'humidité, par exemple, en cellulose, en papier-filtre et en d'autres matériaux assurant le fonctionnement du dispositif.

12. Passoire jetable selon la revendication 1, **caractérisé en ce qu'**il comporte sur la base rigide de la passoire un fermoir permettant de fixer la base rigide de la passoire en position pliée.

13. Passoire jetable selon la revendication 1, **caractérisé en ce qu'**il comporte la base rigide où la ligne de pliage est tracée à l'aide d'une ligne de perforation, d'une encoche, d'une incision, d'une combinaison de ces caractéristiques ou à l'aide d'un autre moyen approprié.

## Patentansprüche

1. Ein Einwegsieb zum Aufguß von losem Tee umfassend einen Aufgußbehälter (3), der aus einem komprimierbaren, feuchtigkeitsdurchlässigen Material hergestellt und an einer starren Basis (1) mit einer Faltlinie (2) befestigt ist, und eine Durchgangsöffnung in den Behälter (3) zum Füllen des Teesiebs und einen Quetschmechanismus mit Fäden (4), die über eine Oberfläche des Aufgußbehälters (3) gelegt sind, so dass das Quetschen des Teegetränks innerhalb des Siebs mit wenigstens einem Faden, sobald das Sieb entlang der Faltlinie (2) gefaltet ist, versehen wird.

2. Das Einwegsieb gemäß Anspruch 1, **dadurch gekennzeichnet, dass** es eine Positionierauflage auf der Oberfläche des Aufgußbehälters des Siebes aufweist, die die Fixierung der Fäden in einer bestimmten Position auf der Oberfläche des Aufgußbehälters, ohne die Bewegungsfreiheit der Fäden zu begrenzen, erlaubt.

3. Das Einwegsieb gemäß Anspruch 1, **dadurch gekennzeichnet, dass** es den Quetschmechanismus mit einer verschiedenen Anzahl von Fäden umfasst.

4. Das Einwegsieb gemäß Anspruch 1, **dadurch gekennzeichnet, dass** es den Quetschmechanismus mit einem variierenden Muster der Fadenführung umfasst.

5. Das Einwegsieb gemäß Anspruch 1, **dadurch gekennzeichnet, dass** es den aus Fäden bestehenden Quetschmechanismus umfasst, wobei ein Ende jedes Fadens fixiert und unbeweglich ist und das andere Ende beweglich ist und während des Quetschens gezogen wird.

6. Das Einwegsieb gemäß Anspruch 1, **dadurch gekennzeichnet, dass** es den aus Fäden bestehenden Quetschmechanismus umfasst, wobei beide Enden jedes Fadens gleich beweglich sind.

7. Das Einwegsieb gemäß Anspruch 1, **dadurch gekennzeichnet, dass** es an den beweglichen Enden der Fäden des Quetschmechanismus die Halter umfasst.

8. Das Einwegsieb gemäß Anspruch 1, **dadurch gekennzeichnet, dass** es den Quetschmechanismus der an der starren Basis des Siebs befestigt ist, umfasst, wobei die unbeweglichen Enden der Fäden in dem Körper der starren Basis befestigt sind, und die beweglichen Enden durch Nuten, die im Körper der starren Basis des Siebs ausgebildet sind, geführt werden.

9. Das Einwegsieb gemäß Anspruch 1, **dadurch gekennzeichnet, dass** es den Quetschmechanismus, der durch mindestens eine Positionierauflage auf dem Aufgußbehälter des Siebes befestigt ist, umfasst.

10. Das Einwegsieb gemäß Anspruch 2, **dadurch gekennzeichnet, dass** es eine Positionierauflage umfasst, wobei die Größe der Positionierauflage gleich der Oberflächengröße des Aufgußteils des Siebs ist.

11. Das Einwegsieb gemäß Anspruch 1, **dadurch gekennzeichnet, dass** das folgende hergestellt wird: die starre Basis aus einem festen und flexiblen Material, zum Beispiel aus Kunststoff, Pappe und anderen ähnlichen Materialien, hergestellt wird, und der Aufgußbehälter aus einem komprimierbaren und feuchtigkeitsdurchlässigen Material, beispielsweise Zellulose, Filterpapier und anderen Materialien, die den Betrieb der Vorrichtung gewährleisten, hergestellt wird.

12. Das Einwegsieb gemäß Anspruch 1, **dadurch gekennzeichnet, dass** es auf der steifen Basis des Siebs eine Klammer zum Befestigen der starren Basis des Siebs in der gefalteten Position umfasst.

13. Das Einwegsieb gemäß Anspruch 1, **dadurch gekennzeichnet, dass** es die starre Basis umfasst, wobei die Faltlinie mit einer Linie aus Perforation, Schütte, Kerbung, mit einer Kombination davon oder mit anderen geeigneten Mitteln markiert ist.

## Claims

1. A disposable strainer for infusing loose tea, which comprises an infusion container (3) made of a compressible moisture-permeable material and fixed to a rigid base (1) with a fold line (2), having a through opening into the container (3) for filling the tea strainer and a squeezing mechanism with threads (4) which are laid over a surface of the infusion container (3), allowing for squeezing with at least one thread the infused tea inside the strainer once the strainer is folded along said fold line (2).

2. The disposable strainer according to claim 1, **characterized in that** it comprises a positioning overlay on the surface of the infusion container of the strainer which allows for fixing the threads in a specific position on the surface of the infusion container without limiting the freedom of movement of the threads.

3. The disposable strainer according to claim 1, **characterized in that** it comprises the squeezing mechanism with a various number of threads.

4. The disposable strainer according to claim 1, **characterized in that** it comprises the squeezing mechanism with a varying pattern of distribution of threads.

5. The disposable strainer according to claim 1, **characterized in that** it comprises the squeezing mechanism comprised of threads, one end of each thread being fixed and immovable and the other end being movable and is drawn during squeezing.

6. The disposable strainer according to claim 1, **characterized in that** it comprises the squeezing mechanism comprised of threads, both ends of each thread being equally movable.

7. The disposable strainer according to claim 1, **characterized in that** it comprises holders at the movable ends of the threads of the squeezing mechanism.

8. The disposable strainer according to claim 1, **characterized in that** it comprises the squeezing mechanism fixed to the rigid base of the strainer, wherein the immovable ends of the threads are fixed in the body of the rigid base and the movable ends are passed through grooves made in the body of the rigid base of the strainer.

9. The disposable strainer according to claim 1, **characterized in that** it comprises the squeezing mechanism fixed to the infusion container of the strainer by at least one positioning overlay.

10. The disposable strainer according to claim 2, **characterized in that** it comprises a positioning overlay wherein the size of the positioning overlay is equal to the surface size of the infusion part of the strainer.

11. The disposable strainer according to claim 1, **characterized in that** it is manufactures from the following: rigid base is manufactured from a solid and flexible material, for example, plastic, cardboard and other materials similar thereto, and the infusion container is manufactured from a compressible and moisture-permeable material, for example, cellulose, filter paper and other materials assuring the operation of the device.

12. The disposable strainer according to claim 1, **characterized in that** on the rigid base of the strainer it comprises a clamp allowing foe fixing the rigid base of the strainer in a folded position.

13. The disposable strainer according to claim 1, **characterized in that** it comprises the rigid base wherein the fold line is marked with a line of perforation, notching, incision, with a combination thereof or with any other suitable means.
